Europäisches Patentamt

European Patent Office

Office européen des brevets

(19)

(11) Veröffentlichungsnummer: **0 006 986**
**B1**

(12) **EUROPÄISCHE PATENTSCHRIFT**

(45) Veröffentlichungstag der Patentschrift:
**29.12.82**

(51) Int. Cl.³: **H 04 L 5/22**, H 04 J 3/00

(21) Anmeldenummer: **79101571.2**

(22) Anmeldetag: **22.05.79**

(54) Datenübertragungssystem sowie Verfahren und Schaltungsanordnung zum Betreiben eines solchen Datenübertragunssystems.

(30) Priorität: **29.06.78 DE 2828602**

(43) Veröffentlichungstag der Anmeldung:
**23.01.80 Patentblatt 80/2**

(45) Bekanntmachung des Hinweises auf die Patenterteilung:
**29.12.82 Patentblatt 82/52**

(84) Benannte Vertragsstaaten:
**AT BE CH IT NL SE**

(56) Entgegenhaltungen:
**DE-A-2 422 622**
**DE-A-2 511 679**
**DE-A-2 714 368**
**DE-B-2 652 038**
**GB-A-1 303 270**

(73) Patentinhaber: **SIEMENS AKTIENGESELLSCHAFT**
**Berlin und München, Postfach 22 02 61,**
**D-8000 München 22 (DE)**

(72) Erfinder: **Draeger, Rolf Joachim, Kreuzbreitlstrasse 1,**
**D-8031 Gröbenzell (DE)**
Erfinder: **Merz, Gerhard, Gräfelfinger Strasse 14,**
**D-8000 München 70 (DE)**

## Datenübertragungssystem sowie Verfahren und Schaltungsanordnung zum Betreiben eines solchen Datenübertragungssystems

Die Erfindung bezieht sich auf ein Datenübertragungssystem mit Daten abgebenden und aufnehmenden Datenkanälen, in welchem die Datenbits zusammen mit Steuerbits in Envelopes synchron übertragen werden, sowie auf ein Verfahren zum Betreiben eines solchen Datenübertragungssystems und auf eine Schaltungsanordnung zur Durchführung des betreffenden Verfahrens.

Die Übertragung von Daten zwischen Datenendeinrichtungen in Envelopes ist bereits bekannt (EUROCON '77, European Conference on Electrotechnics, Conference Proceedings on Communications, Venezia-Italia, 3—7 May 1977, S. 580 bis 586: »Experimental Point-To-Point Connections For Synchronous Digital Data Transmission«). Die Bildung der Envelopes erfolgt dabei entsprechend der CCITT-Empfehlung X. 50, wonach eine 6+2-Struktur benutzt wird. Demgemäß besteht jedes Envelope aus sechs Datenbits, einem Synchronisierbit und einem Zustandsbit. An dieser Stelle sei noch angemerkt, daß es nach der CCITT-Empfehlung X.51 auch eine 8+2-Envelope-Struktur gibt, bei der jedes Envelope aus acht Datenbits, einem Synchronisierbit und einem Zustandsbit gebildet ist. Die in dem jeweiligen Envelope enthaltenen Datenbits sind die von lediglich einer Datenendeinrichtung abgegebenen Datenbits. Durch die mit dem jeweiligen Envelope übertragenen Synchronisier- und Zustandsbits erfolgt eine Bitsynchronisation bzw. eine Kennzeichnung der Datenbits als Nachrichtensignalbits oder als Signalisierungsbits.

Zur Übertragung von Daten ist es ferner bekannt (DE-B-2 714 368), ein synchrones Datennetz zu verwenden, bei dem die Datenendeinrichtungen über Datenanschlußgeräte mit dem Datennetz verbunden werden. Die Datenanschlußgeräte fassen die von den Datenendeinrichtungen herkommenden Daten in Envelopes zusammen. Sodann erfolgt eine Verschachtelung von mehreren, derartige Enevelopes führenden langsamen Kanälen zu einem schnellen Kanal. Auch dabei bilden die in jedem Envelope auftretenden Datenbits die zu jeweils einem Datensignal gehörenden Datenbits.

Um bei der zuvor betrachteten bekannten Verfahrensweise eine eindeutige Zuordnung der nach dem Zeitmultiplexprinzip übertragenen Envelopes zu den einzelnen in Frage kommenden Datenendeinrichtungen sicherzustellen, muß noch eine gesonderte Synchronisierinformation mit übertragen werden, die zu einer sogenannten Rahmen- bzw. Bitgruppensynchronisation herangezogen wird. Dies bedeutet, daß neben den für die eigentliche Bitsynchronisation dienenden, in den einzelnen Envelopes enthaltenen Synchronisierbits noch eine zusätzliche, der Bitgruppensynchronisation dienende Synchronisierinformation erforderlich ist. Neben dem damit verbundenen Nachteil, daß nicht die gesamte vorhandene Übertragungskapazität für die Übertragung von Nutzinformationen (das sind Datensignale) ausgenutzt werden kann, haftet der betreffenden Lösung noch der Nachteil an, daß für ihre Realisierung ein nicht unerheblicher schaltungstechnischer Aufwand erforderlich ist.

Im Zusammenhang mit der Übertragung von unstrukturierten Datensignalen, die von einer Vielzahl von Signalgebern abgegeben werden, nach dem Zeitmultiplexprinzip über eine einzige Übertragungsstrecke ist es nun auch üblich, in zyklisch wiederholt auftretenden Rahmen jeweils ein Datensignalbit der von sämtlichen Signalquellen abgegebenen Datensignale zu übertragen. Dabei wird jeder Rahmen durch eine gesonderte Synchronisierinformation markiert, die dem gleichen Zweck dient wie die zuvor betrachtete Synchronisierinformation. Wenn nun die Forderung besteht, die unstrukturierten Datensignale in Envelopes zu übertragen, dann werden zusätzlich zu den Datensignalbits noch die zu dem jeweiligen Envelopes gehörenden Synchronisier- und Statusbits übertragen. Damit ist aber dieses Untermultiplex-Übertragungsprinzip genauso nachteilig wie das zuvor betrachtete Übertragungsprinzip. Der Erfindung liegt nun die Aufgabe zugrunde, einen Weg zu zeigen, wie auf relativ einfache Weise die jeweils vorhandene Übertragungskapazität besser als bisher für die eigentliche Datenübertragung ausgenutzt werden kann.

Gelöst wird die vorstehend aufgezeigte Aufgabe bei einem Datenübertragungssystem der eingangs genannten Art erfindungsgemäß dadurch, daß jedes Envelope Datenbits zumindest zweier Daten abgebener Datenkanäle aufweist und daß die Steuerbits als alleinige Synchronisierinformation für eine Bit- und Bitgruppensynchronisation ausgenutzt sind.

Die Erfindung bringt den Vorteil mit sich, daß durch die angegebene Ausnutzung jedes Envelopes für die Aufnahme der Datenbits zumindest zweier Daten abgebender Datenkanäle und durch die doppelte Ausnutzung der Steuerbits der betreffenden Envelopes sowohl für eine Bitals auch für eine Bitgruppensynchronisation ohne die Übertragung einer gesonderten Synchronisierinformation ausgekommen werden kann, so daß die jeweils vorhandene Übertragungskapazität für die Übertragung der Daten besser ausgenutzt ist als bisher.

Zum Betreiben eines Datenübertragungssystem gemäß der Erfindung ist es zweckmäßig, ein Verfahren anzuwenden, welches durch die Aufeinanderfolge folgender Verfahrensschritte gekennzeichnet ist:

a) Sendeseitig werden die aus jeder Datenendeinrichtung stammenden unstrukturierten Daten mit der jeweiligen Datenübertragungsgeschwindigkeit über die jeweiligen Datenkanäle übertragen,
b) die Daten werden derart verschachtelt und unter Hinzufügung der Steuerbits zu Envelopes zusammengefaßt, daß jedes Envelope Datenbits einer Mehrzahl der Datenkanäle enthält und daß die Anzahl der Datenbits jedes Datenkanals abhängig ist von dem Verhältnis der Datenübertragungsgeschwindigkeit eines mit dem Datennetz verbundenen Teilnehmerkanals zu den Datenübertragungsgeschwindigkeiten in dem zugehörigen Datenkanal,
c) die Envelopes werden seriell an den Teilnehmerkanal ausgegeben,
d) empfangsseitig werden von den über den Teilnehmerkanal übertragenen Envelopes die Steuerbits abgetrennt, und die Datenbits werden auf die entsprechenden Datenkanäle aufgeteilt,
e) die Aufteilung der Datenbits in Bitgruppen und die Erfassung der einzelnen Datenbits werden mittels der Steuerbits synchronisiert,
f) die Daten werden seriell mit den entsprechenden Datenübertragungsgeschwindigkeiten über die Datenkanäle zu den angeschlossenen Datenendeinrichtungen übertragen.

Hierdurch ergibt sich der Vorteil einer relativ einfachen Verfahrensweise im Hinblick auf die angestrebte bessere Ausnutzung der jeweils vorhandenen Übertragungskapazität für die eigentliche Datenübertragung.

Zweckmäßigerweise wird einem Datenkanal zumindest ein Datenbit in wenigstens einem Envelope aus einer Reihe von Envelopes zugeordnet. Hierdurch ergibt sich der Vorteil, daß auf relativ einfache Weise Daten mit unterschiedlichen Datenübertragungsraten von den einzelnen Datenkanälen her für die Übertragung berücksichtigt werden können.

Zur Durchführung des Verfahrens gemäß der Erfindung ist es zweckmäßig, eine Schaltungsanordnung zu verwenden, wobei die Datenendeinrichtungen über gesonderte Datenkanäle und Datenanschlußgeräte mit einem synchronen Datennetz verbindbar sind. Diese Schaltungsanordnung ist dadurch gekennzeichnet, daß im Verbindungsweg zwischen den Datenendeinrichtungen und dem entsprechenden Datenanschlußgerät sowohl auf der Sendeseite als auch auf der Empfangsseite jeweils ein Kanalteiler vorgesehen ist, der die über die Datenkanäle übertragenen Datenbits verschachtelt bzw. die Datenbits der Envelopes auf die verschiedenen Datenkanäle aufteilt. Das Datenanschlußgerät enthält sowohl sendeseitig als auch empfangsseitig mindestens einen Speicher, in den die über die Datenkanäle übertragenen Datenbits über den Kanalteiler eingespeichert werden bzw. aus dem die Datenbits der Envelopes ausgelesen werden und über den Kanalteiler an die Datenkanäle abgegeben werden. Hierdurch ergibt sich der Vorteil eines relativ geringen schaltungstechnischen Aufwands.

Eine einfache Ausführungsform der Schaltungsanordnung ist dadurch gekennzeichnet, daß der Kanalteiler für jeden Datenkanal ein sendeseitiges Schieberegister und ein empfangsseitiges Schieberegister enthält, in dem die den Datenkanälen zugeordneten Daten vor ihrer Übernahme in das Datenanschlußgerät bzw. nach ihrer Übergabe vom Datenanschlußgerät zwischengespeichert werden. Hierbei ist es zweckmäßig, daß die Länge der Schieberegister gleich ist der Anzahl der dem jeweiligen Datenkanal zugeordneten Datenbits.

Falls den Datenkanälen jeweils Datenbits einer Mehrzahl von Envelopes zugeordnet werden, ist es zweckmäßig, wenn das Datenanschlußgerät sowohl sendeseitig als auch empfangsseitig eine Mehrzahl von Envelopes aufnehmende Schieberegister enthält, die mit den den Datenkanälen zugeordneten Schieberegistern verbunden sind.

Um über die Datenanschlußgeräte sowohl einkanalig als auch mehrkanalig Daten zum Datennetz übertragen zu können ist es vorteilhaft, wenn Umschalter vorgesehen sind, über die in einem sendeseitigen Taktgeber bzw. in einer empfangsseitigen Synchronisiereinrichtung erzeugte Taktimpulse wahlweise im Datenanschlußgerät vorgesehenen weiteren Schieberegistern oder Frequenzteilern zugeführt werden, die der Mehrzahl von Datenkanälen zugeordnete Sende- bzw. Empfangstakte erzeugen.

Im folgenden wird ein Ausführungsbeispiel einer Schaltungsanordnung zum Durchführen des Verfahrens anhand von Zeichnungen beschrieben.

Es zeigt

Fig. 1 ein Blockschaltbild eines Teils einer bekannten Datenübertragungsanordnung,

Fig. 2 ein Blockschaltbild einer für die Durchführung des Verfahrens geeigneten Datenübertragungsanordnung,

Fig. 3 Darstellungen von Envelopes bei einer einkanaligen und bei einer mehrkanaligen Übertragung,

Fig. 4 Darstellungen von jeweils zwei zusammengefaßten Envelopes bei einer einkanaligen und einer mehrkanaligen Übertragung,

Fig. 5 ein Blockschaltbild eines mit einem Kanalteiler versehenen Datenanschlußgerätes.

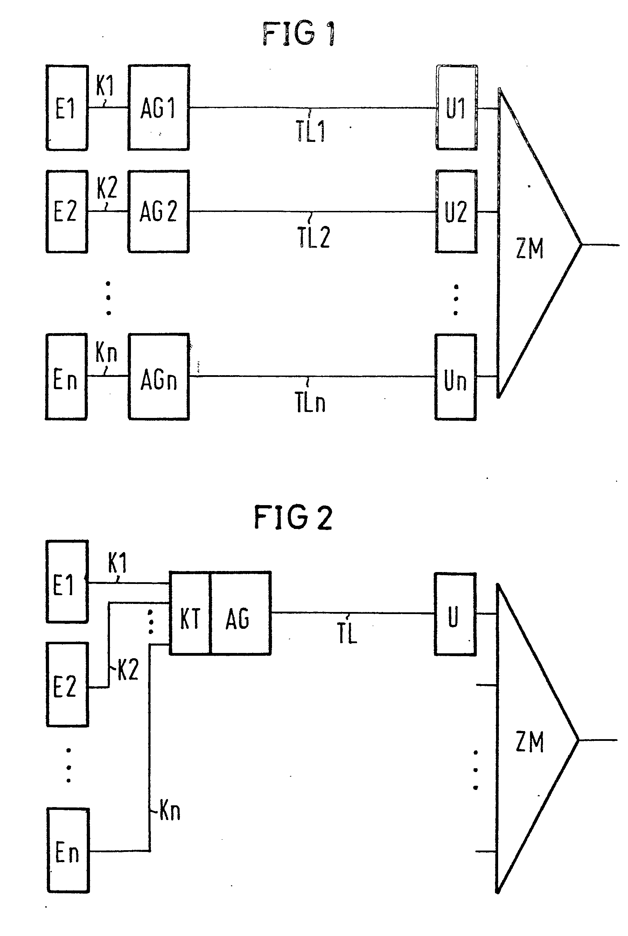

Bei dem in Fig. 1 dargestellten Teil einer bekannten Datenübertragungsanordnung werden von einer Mehrzahl von Datenendeinrichtungen E1 bis En Daten über Datenkanäle K1 bis Kn an Datenanschlußgeräte AG1 bis AGn übertragen. Die Datenanschlußgeräte AG1 bis AGn stellen die Verbindung zwischen den Datenendeinrichtungen E1 bis En und einem synchronen Datennetz dar, von dem nur Teilnehmerleitungen TL1 bis TLn und ein Zeitmultiplexsystem ZM mit vorgeschalteten Übertragungseinheiten U1 bis Un dargestellt sind.

Die von einem sendenden zu einem empfangenden Teilnehmer zu übertragenden Daten werden von der Datenendeinrichtung, beispielsweise der Datenendeinrichtung E1 über den Datenkanal K1 an das Datenanschlußgerät AG1 abgegeben. Das Datenanschlußgerät AG1 faßt die Daten blockweise zusammen und bildet für eine transparente Übertragung von Daten über das synchrone Datennetz die Envelopes. Beispielsweise werden jeweils acht Datenbits mit zwei Steuerbits, nämlich einem Synchronisierbit und einem Zustandsbit versehen. Weiterhin erzeugt das Datenanschlußgerät AG1 für die jeweilige Übertragungsart geeignete Signale mit denen die Envelopes über die Teilnehmerleitung TL1 zur Übertragungseinheit U1 und anschließend zum Zeitmultiplexsystem abgegeben werden.

Die Signale werden beim empfangenden Teilnehmer von den Übertragungseinheiten U1 bis Un entsprechenden Übertragungseinheiten über Teilnehmerleitungen zu den dortigen Datenendeinrichtungen zugeordneten Datenanschlußgeräten übertragen. Die Datenanschlußgeräte gewinnen aus den Signalen wieder die Envelopes zurück, trennen die Steuerbits wieder ab und übertragen die in den Datenbits enthaltenen Daten zu der entsprechenden Datenendeinrichtung.

Falls zwischen weiteren Datenendeinrichtungen Daten gleichzeitig übertragen werden sollen, ist bei bekannten Datenübertragungsanordnungen die Verwendung von weiteren, den jeweiligen Datenendeinrichtungen zugeordneten Datenanschlußgeräten erforderlich, die die Daten jeweils über eigene Teilnehmerleitungen übertragen.

Bei der in Fig. 2 dargestellten Datenübertragungsanordnung ist für eine gleichzeitige Übertragung von Daten von oder zu einer Mehrzahl von Datenendeinrichtungen nur ein einziges Datenanschlußgerät AG und eine Teilnehmerleitung erforderlich. Dem Datenanschlußgerät AG ist ein Kanalteiler KT vorgeschaltet, über den die Datenkanäle K1 bis Kn zum Datennetz durchschaltbar sind. Der Kanalteiler KT ordnet den Datenkanälen K1 bis Kn Datenbits der Envelopes zu und gibt diese Datenbits an das Datenanschlußgerät AG ab. Das Datenanschlußgerät AG überträgt in bekannter Weise die envelopestrukturierten Daten über die Teilnehmerleitung TL zu einer Übertragungseinheit U und gibt sie an ein Zeitmultiplexsystem ab. Vom Zeitmultiplexsystem über die Teilnehmerleitung TL bei einem entsprechenden Datenanschlußgerät beim empfangenden Teilnehmer ankommende Envelopes werden im Datenanschlußgerät von den Steuerbits befreit, und die Datenbits werden an einen entsprechenden Kanalteiler abgegeben, der sie den einzelnen Kanälen zuordnet.

Da in den Datenkanälen K1 bis Kn nur unstrukturierte Daten übertragen werden können, weil eine zusätzliche Geschwindigkeitstransformation für die Bildung der Envelopes nicht nochmals möglich ist, erfolgt die Übertragung der Daten im Datennetz zweckmäßigerweise über Standverbindungen. Es ist aber auch möglich, Teilnehmerleitungen für Wählbetrieb mehrfach auszunutzen. In diesem Fall können beispielsweise die Vermittlungskriterien durch Einfügen eines weiteren Synchronisierbits übertragen werden. Ein derartiges Verfahren wurde beispielsweise in der Patentanmeldung P 2 727 912.5 vorgeschlagen.

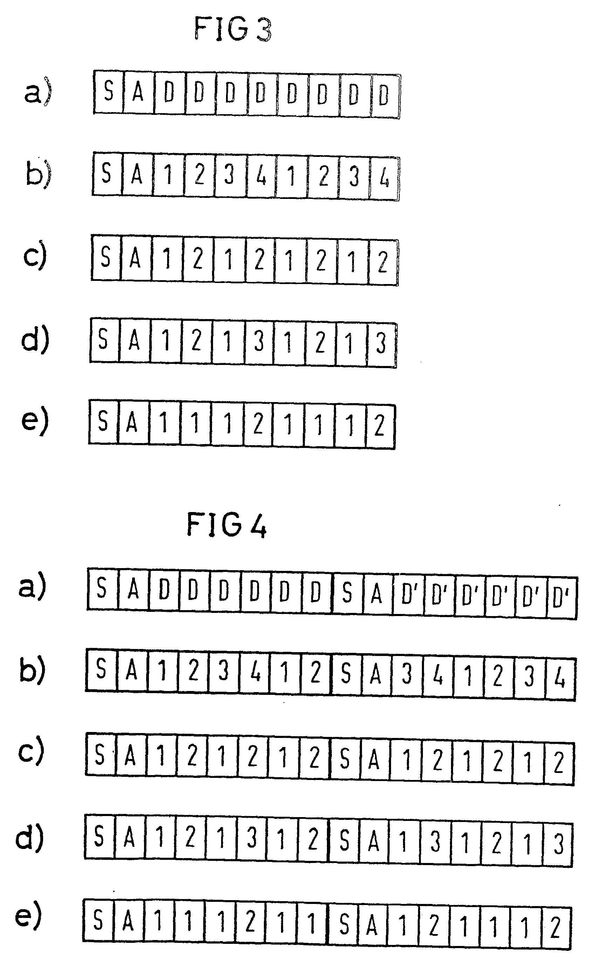

Das in Fig. 3, Zeile a dargestellte Envelope enthält in bekannter Weise zwei Steuerbits, nämlich ein Synchronisierbit S und ein Zustandsbit A, sowie acht Datenbits D. Die Datenbits D sind bei der bekannten Datenübertragungsanordnung, wie sie in Fig. 1 dargestellt ist, einem einzigen Datenkanal zwischen einer Datenendeinrichtung und einem Datenanschlußgerät zugeordnet. Dieser Datenkanal hat beispielsweise eine Übertragungsgeschwindigkeit von 2400, 4800, 7200 oder 9600 bit/s. Das Datenanschlußgerät ist beispielsweise für eine Übertragungsgeschwindigkeit von bis zu 9600 bit/s ausgelegt. Durch das Hinzufügen der Steuerbits S und A ergibt sich an der der Teilnehmerleitung zugewandten Seite des Datenanschlußgeräts bei der Nettoübertragungsgeschwindigkeit von 9600 bit/s eine Bruttoübertragungsgeschwindigkeit von 12 000 bit/s. Von diesen Werten der Übertragungsgeschwindigkeiten wird im folgenden ausgegangen.

Bei dem in Zeile b dargestellten Envelope werden, entsprechend Fig. 2, durch den Kanalteiler vier Datenkanäle zusammengefaßt. Jeder der Datenkanäle hat eine Übertragungsgeschwindigkeit von 2400 bit/s, so daß sich am Ausgang des Datenanschlußgeräts AG wieder eine Nettoübertragungsgeschwindigkeit von 9600 bit/s ergibt. Die Datenbits des Envelopes werden zeitlich nacheinander den mit 1 bis 4 bezeichneten Datenkanälen zugeordnet. Mit jedem Envelope werden somit Daten von allen vier Datenendeinrichtungen in dem Datennetz übertragen.

In entsprechender Weise sind bei dem in Zeile c dargestellten Envelope zwei Datenkanäle mit jeweils einer Übertragungsgeschwindigkeit von 4800 bit/s verschachtelt. Als weiteres Beispiel ist in Zeile d ein Envelope angegeben, bei dem die Datenbits drei Datenkanälen zugeordnet sind, wobei der Datenkanal 1 eine Übertragungsgeschwindigkeit von 4800 bit/s und die Datenkanäle 2 und 3 Übertragungsgeschwindigkeiten von 2400 bit/s aufweisen. Bei dem in Zeile e dargestellten Envelope weist der Datenkanal 1 eine Übertragungsgeschwindigkeit von 7200 bit/s und der Datenkanal 2 eine Übertragungsgeschwindigkeit von 2400 bit/s auf.

Die Anzahl der Datenbits, die einem Datenkanal zugeordnet werden, ist proportional seiner Übertragungsgeschwindigkeit. Wenn mit n die Anzahl der Datenbits eines Envelopes angegeben wird, so ist die Anzahl der Datenbits gleich dem n-fachen Quotienten aus der Übertragungsgeschwindigkeit des entsprechenden Datenkanals und der Nettoübertragungsgeschwindigkeit der Envelopes.

Falls sich bei der Ermittlung der Anzahl der einem Datenkanal zugeordneten Datenbits keine ganze Zahl ergibt, werden mehrere Envelopes zusammengefaßt und die Datenkanäle auf diese Envelopes aufgeteilt.

Die in Fig. 4 in Zeile a dargestellten beiden Envelopes enthalten jeweils zwei Steuerbits S und A sowie sechs Datenbits D bzw. D'. Falls unter Verwendung dieser Envelopes bei einer Nettoübertragungsgeschwindigkeit von 9600 bit/s vier Datenkanäle mit jeweils 2400 bit/s übertragen werden sollen, werden diese Datenkanäle 1 bis 4 entsprechend der Darstellung in Zeile b auf die beiden Envelopes aufgeteilt.

Bei einer Zuordnung der Datenbits zu zwei Datenkanälen mit jeweils einer Übertragungsgeschwindigkeit von 4800 bit/s ist eine Zusammenfassung von zwei Envelopes, wie in Zeile c dargestellt, nicht unbedingt erforderlich. Hier können auch innerhalb eines Envelopes, ähnlich wie in Fig. 3, jeweils drei Bits dem ersten Datenkanal und drei Bits dem zweiten Datenkanal zugeordnet werden.

In den Zeilen d und e ist, entsprechend den Zeilen d und e in Fig. 3, die Aufteilung von drei bzw. zwei Datenkanälen mit 4800 und 2400 bzw. 7200 und 2400 bit/s dargestellt. Ebenso wie in Zeile b sind auch hier zwei Envelopes erforderlich, um die Datenkanäle entsprechend ihrer Übertragungsgeschwindigkeit gleichmäßig den Datenbits der Envelopes zuzuordnen. Zur Bildung eines Überrahmens wird die Wechselfolge $1-0-1$... der Synchronisierbits S der aufeinanderfolgenden Envelopes herangezogen.

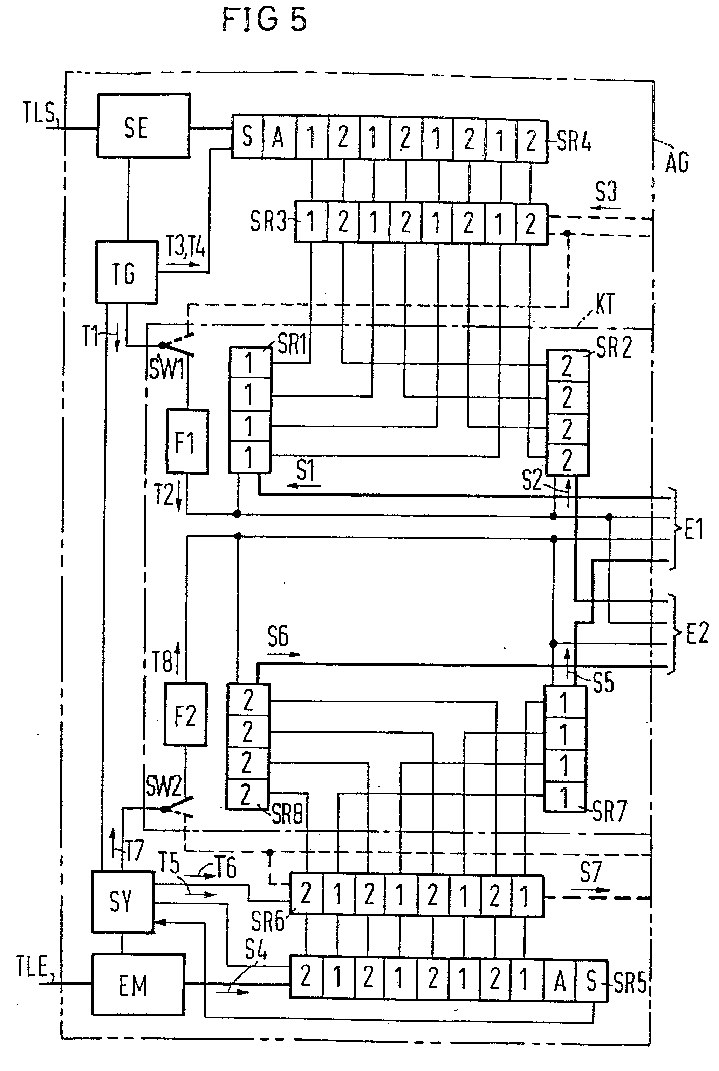

Der in Fig. 5 dargestellte Kanalteiler KT ist für einen Anschluß von zwei Datenkanälen K1 und K2 mit jeweils 4800 bit/s ausgebildet. Das ebenfalls dargestellte Datenanschluß AG ist für eine Nettoübertragungsgeschwindigkeit von 9600 bit/s vorgesehen.

Von der Datenendeinrichtung E1 kommende Daten werden als Signale S1 einem Schieberegister SR1 zugeführt. Ein Taktgeber TG des Datenanschlußgeräts erzeugt Taktimpulse T1, die der Übertragungsgeschwindigkeit von 9600 bit/s zugeordnet sind. Über einen Schalter SW1, der sich bei einer mehrkanaligen Übertragung in der durchgezogen dargestellten Stellung befindet, werden die Taktimpulse T1 einem Frequenzteiler F1 zugeführt, der Sendetakte T2 an die Datenendeinrichtung E1 abgibt, deren Folgefrequenz die Hälfte der Folgefrequenz der Taktimpulse T1 beträgt. Mit diesen Sendeschritttakten T2 werden auch die den Signalen S1 entsprechenden Daten in das Schieberegister SR1 seriell eingespeichert. Gleichzeitig gib die Datenendeinrichtung E2 Daten als Signale S2 an ein Schieberegister SR2 ab. Der Datenendeinrichtung E2 wird ebenfalls der Sendetakt T2 zugeführt, und es werden die den Signalen S2 entsprechenden Daten in das Schieberegister SR2 seriell eingespeichert. Die Ausgänge der Schieberegister SR1 und SR2 sind mit den parallelen Eingängen eines Schieberegisters SR3 im Datenanschlußgerät verbunden, und die Zustände der Speicherzellen des Schieberegisters SR3 ändern sich entsprechend den Zuständen der mit ihnen verbundenen Speicherzellen der Schieberegister SR1 und SR2.

Der Taktgeber TG erzeugt Taktimpulse T3, mit denen der Inhalt des Schieberegisters SR3 in ein Schieberegister SR4 übernommen wird. Gleichzeitig werden in die ersten beiden Stellen dieses Schieberegisters SR4 die beiden S Steuerbits S und A eingespeichert. Anschließend gibt der Taktgeber TG Taktimpulse T4 mit einer Folgefrequenz, die der Bruttoübertragungsgeschwindigkeit der Envelopes entspricht, an das Schieberegister SR4 ab. Mit diesen Taktimpulsen wird der Inhalt des Schieberegisters SR4 seriell zu einem Sender SE übertragen, der mit einem Scrambler, einem Codierer und einem Impulsformer versehen ist und der Sendesignale über eine Teilnehmerleitung TLS an das Datennetz abgibt.

Falls das Datenanschlußgerät auch für eine einkanalige Übertragung verwendet werden soll, werden die von der Datenendeinrichtung kommenden Daten als Signale S3 dem seriellen Eingang des Schieberegisters SR3 zugeführt. Der Umschalter SW1 nimmt die gestrichelt dargestellte Stellung an, und die Taktimpulse T1 werden als Sendetakt der Datenendeinrichtung zugeführt, mit dem die in den Signalen S3 enthaltenen Daten seriell in das Schieberegister SR3 eingespeichert werden. Anschließend wird in gleicher Weise wie beim mehrkanaligen Betrieb der Inhalt des Schieberegisters SR3 in das Schieberegister SR4 übernommen und ausgesendet.

Über eine Teilnehmerleitung TLE ankommende Signale werden einem Empfänger EM des Datenanschlußgeräts zugeführt. Der Empfänger EM enthält einen Regelverstärker, einen automatischen Entzerrer, einen Decodierer und einen Descrambler, und er gibt an seinem Ausgang Signale S4 ab, die jeweils ein empfangenes Envelope darstellen. Der Empfänger EM ist mit einer Synchronisiereinrichtung SY verbunden, die Taktimpulse T5 erzeugt, mit denen die in den Signalen S4 enthaltenen Daten in ein Schieberegister SR5 eingespeichert werden. Wenn das Synchronisierbit S erkannt wird, gibt die Synchronisiereinrichtung SY einen Taktimpuls T6 an ein Schieberegister SR6 ab, das nur die Datenbits des Envelopes übernimmt. Anschließend wird entsprechend der Zuordnung der Datenkanäle zu den Datenbits des Envelopes ein Teil des Inhalts des Schieberegisters SR6 in das Schieberegister SR7 bzw. in das Schieberegister SR8 übernommen.

Die Synchronisiereinrichtung SY gibt Taktimpulse T7 ab, deren Folgefrequenz der Nettoübertragungsgeschwindigkeit von 9600 bit/s entspricht. Über einen Umschalter SW2, der sich in der durchgezogenen dargestellten Stellung befindet, werden die Taktimpulse T7 einem Frequenzteiler F2 zugeführt, der die Folgefrequenz der Taktimpulse T7 halbiert und Taktimpulse T8 an die Schieberegister SR7 und SR8 abgibt, mit denen ihr Inhalt seriell ausgelesen wird. Die an ihrem seriellen Ausgang abgegebenen Daten werden als Signale S5 bzw. S6 an die Datenendeinrichtungen E1 bzw. E2 abgegeben. Außerdem gibt der Frequenzteiler F2 die Taktimpulse T8 als zugehörige Empfangsschritttakte an die Datenendeinrichtungen E1 und E2 ab.

Bei einem einkanaligen Betrieb des Datenanschlußgeräts nimmt auch der Umschalter SW2 die gestrichelt dargestellte Stellung an, und der Inhalt des Schieberegisters SR6 wird nach der Übernahme aus dem Schieberegister SR5 seriell ausgelesen. An seinem Ausgang abgegebene Signale S7 stellen die Empfangsdaten dar, und sie werden zusammen mit einem Empfangstakt T7 an die entsprechende Datenendeinrichtung abgegeben.

Bei einer Verwendung von mehreren Envelopes anstelle der in Fig. 5 dargestellten Schaltungsanordnung für eine Übertragung von aus acht Datenbits und zwei Steuerbits gebildeten Envelopes sind die Schieberegister SR3 bis SR6 für eine Aufnahme der entsprechenden Anzahl von Envelopes ausgebildet und die Übernahme in die Schieberegister SR4 bzw. SR6 erfolgt jeweils nach der Anzahl der zusammengefaßten Envelopes.

**Patentansprüche**

1. Datenübertragungssystem mit Daten abgebenden und aufnehmenden Datenkanälen, in welchem die Datenbits zusammen mit Steuerbits in Envelopes synchron übertragen werden, dadurch gekennzeichnet, daß jedes Envelope Datenbits zumindest zweier Daten abgebender Datenkanäle aufweist und daß die Steuerbits als alleinige Synchronisierinformation für eine Bit- und Bitgruppensynchronisation ausgenutzt sind.

2. Verfahren zum Betreiben eines Datenübertragungssystems nach Anspruch 1, gekennzeichnet durch die Aufeinanderfolge folgender Verfahrensschritte:

a) sendeseitig werden die aus jeder Datenendeinrichtung (E1 bis En) stammenden unstrukturierten Daten mit der jeweiligen Datenübertragungsgeschwindigkeit über die jeweiligen Datenkanäle (K1 bis Kn) übertragen,

b) die Daten werden derart verschachtelt und unter Hinzufügung der Steuerbits zu Envelopes zusammengefaßt, daß jedes Envelope Datenbits einer Mehrzahl der Datenkanäle (K1 bis Kn) enthält und daß die Anzahl der Datenbits jedes Datenkanals (K1 bis Kn) abhängig ist von dem Verhältnis der Datenübertragungsgeschwindigkeit eines mit dem Datennetz verbundenen Teilnehmerkanals (TL) zu den Datenübertragungsgeschwindigkeiten in dem zugehörigen Datenkanal (K1 bis Kn),

c) die Envelopes werden seriell an den Teilnehmerkanal (TL) ausgegeben,

d) empfangsseitig werden von den über den Teilnehmerkanal (TL) übertragenen Envelopes die Steuerbits abgetrennt, und die Datenbits werden auf die entsprechenden Datenkanäle (K1 bis Kn) aufgeteilt,

e) die Aufteilung der Datenbits in Bitgruppen und die Erfassung der einzelnen Datenbits werden mittels der Steuerbits synchronisiert,

f) die Daten werden seriell mit den entsprechenden Datenübertragungsgeschwindigkeiten über die Datenkanäle zu den angeschlossenen Datenendeinrichtungen (E1 bis En) übertragen.

3. Verfahren nach Anspruch 2, dadurch gekennzeichnet, daß einem Datenkanal (K1 bis Kn) zumindest ein Datenbit (D) in wenigstens einem Envelope aus einer Reihe von Envelopes zugeordnet wird.

4. Schaltungsanordnung zur Durchführung des Verfahrens nach Anspruch 2 oder 3, wobei die Datenendeinrichtungen über zugeordnete Datenkanäle und Datenanschlußgeräte mit einem synchronen Datennetz verbindbar sind, dadurch gekennzeichnet, daß im Verbindungsweg zwischen den Datenendeinrichtungen (E1 bis En) und dem entsprechenden Datenanschlußgerät (AG) sowohl auf der Sendeseite als auch auf der Empfangsseite jeweils ein Kanalteiler (KT) vorgesehen ist, der die über die Datenkanäle (K1 bis Kn) übertragenen Datenbits verschachtelt bzw. die Datenbits der Envelopes auf die verschiedenen Datenkanäle (K1 bis Kn) aufteilt, und daß das Datenanschlußgerät (AG) sowohl sendeseitig als auch empfangsseitig mindestens einen Speicher enthält, in den die über die Datenkanäle (K1 bis Kn) übertragenen Datenbits über den Kanalteiler (KT) eingespeichert werden bzw. aus dem die Datenbits der Envelopes ausgelesen werden und über den Kanalteiler (KT) an die Datenkanäle (K1 bis Kn) abgegeben werden.

5. Schaltungsanordnung nach Anspruch 4, dadurch gekennzeichnet, daß der Kanalteiler (KT) für jeden Datenkanal (K1 bis Kn) ein sendeseitiges Schieberegister (SR1, SR2) und ein empfangsseitiges Schieberegister (SR7, SR8) enthält, in dem die den Datenkanälen (K1 bis Kn) zugeordneten Daten vor ihrer Übernahme in das Datenanschlußgerät (AG) bzw. nach ihrer Übergabe vom Datenanschlußgerät (AG) zwischengespeichert werden.

6. Schaltungsanordnung nach Anspruch 5, dadurch gekennzeichnet, daß die Länge der Schieberegister (SR1, SR2. SR7, SR8) gleich ist der Anzahl der dem jeweiligen Datenkanal (K1 bis Kn) zugeordneten Datenbits (D, D').

7. Schaltungsanordnung nach Anspruch 5 oder 6, dadurch gekennzeichnet, daß das Datenanschlußgerät (AG) sowohl sendeseitig als auch empfangsseitig jeweils eine Mehrzahl von Envelopes aufnehmende Schieberegister (SR3 bis SR6) enthält, die mit den den Datenkanälen (K1 bis Kn) zugeordneten Schieberegistern (SR1, SR2, SR7, SR8) verbunden sind.

8. Schaltungsanordnung nach einem der Ansprüche 4 bis 7, dadurch gekennzeichnet, daß Umschalter (SW1, SW2) vorgesehen sind, über die in einem sendeseitigen Taktgeber (TG) bzw. in einer empfangsseitigen Synchronisiereinrichtung erzeugte Taktimpulse (T1 bzw. T9) wahlweise im Datenanschlußgerät (AG) vorgesehenen Schieberegistern (SR3, SR6) oder Frequenzteilern (F1, F2) zugeführt werden, die der Mehrzahl von Datenkanälen (K1 bis Kn) zugeordnete Sende- bzw. Empfangstakte (T2 bzw. T11) erzeugen.

## Claims

1. Data transmission system comprising data-emitting and data-receiving data channels, wehrein the data bits together with control bits are synchronously transmitted in envelopes, characterised in that each envelope possesses data bits of at least two data-emitting data channels, and that the control bits are utilised as sole synchronising information for a bit synchronisation and bit group synchronisation.

2. Process for the operation of a data transmission system as claimed in claim 1, characterised by the succession of the following steps:

a) At the transmitting end, the unstructured items of data which stem from the data terminal device (E1 to En) are transmitted via the respective data channels (K1 to Kn) at the respective data transmission speed,

b) the items of data are interleaved and during the addition of the control bits combined to form envelopes in such manner that each envelope contains data bits of a plurality of the data channels (K1 to Kn) and that the number of the data bits of each data channel (K1 to Kn) is dependent upon the ratio of the data transmission speed of a subscriber channel (TL) connected to the data network to the data transmission speeds in the assigned data channel (K1 to Kn),

c) envelopes are serially emitted to the subscriber channel (TL),

d) at the receiving end, the control bits are separated from the envelopes transmitted via the subscriber channel (TL) and the data bits are distributed onto the corresponding data channels (K1 to Kn),

e) the distribution of the data bits into bit groups and the acquisition of data bits are synchronised by means of the control bits,

f) the items of data are serially transmitted via the data channels to the connected data terminal devices (E1 to En) at the appropriate data transmission speeds.

3. Process as claimed in claim 2, characterised in that one data channel (K1 to Kn) is assigned at least one data bit (D) in at least one envelope from a series of envelopes.

4. Circuit arrangement for the implementation of the process as claimed in claim 2 or 3, wherein the data terminal devices can be connected to a synchronous data network by means of assigned data channels and data peripheral units, characterised in that in the connection path between the data terminal devices (E1 to En) and the corresponding data peripheral unit (AG), both on the transmitting side and on the receiving side, there is respectively arranged a channel divider (KT) which interleaves the data bits transmitted via the data channels (K1 to Kn) or, as the case may be, distributes the data bits of the envelopes onto the different data channels (K1 to Kn), and that the data peripheral unit (AG) contains at least one store both at the transmitting end and at the receiving end, into which store the data bits transmitted via the data channels (K1 to Kn) are read by means of the channel divider (KT) or, as the case may be, from which store the data bits of the envelopes are read out and emitted to the data channels (K1 to Kn) by means of the channel divider (KT).

5. Circuit arrangement as claimed in claim 4, characterised in that for each data channel (K1 to Kn), the channel divider (KT) contains a shift register ( SR1, SR2) at the transmitting end and a shift register (SR7, SR8) at the receiving end, in which shift register the items of data which are assigned to the data channels (K1 to Kn) are temporaily stored prior to their acceptance in the data peripheral unit (AG) or, as the case may be, following their transfer from the data peripheral unit (AG).

6. Circuit arrangements as claimed in claim 5, characterised in that the length of the shift registers (SR1, SR2, SR7, SR8) is equal to the number of the data bits (D, D') which is assigned to the respective data channel (K1 to Kn).

7. Circuit arrangement as claimed in claim 5 or 6, characterised in that the data peripheral unit (AG) contains a plurality of shift registers (SR3 to SR6), which receive envelopes and which are connected to the shift registers (SR1, SR2, SR7, SR8) assigned to the data channels (K1 to Kn), both at the transmitting end and at the receiving end respektively.

8. Circuit arrangement as claimed in one of claims 4 to 7, characterised in that there are provided changeover switches (SW1, SW2) by means of which clock pulses (T1 or T9) which are produced in a pulse generator (TG) at the transmitting end or, as the case may be, in a synchronising device, are optionally fed to shift registers (SR3, SR6) or frequency dividers (F1, F2) which are arranged in the data peripheral unit (AG) and which produce transmitting and receiving clock pulses (T2 and T11) assigned to the plurality of data channels (K1 to Kn).

## Revendications

1. Système de transmission de données avec des canaux de données fournissant et recevant des données, du type dans lequel les bits d'information sont transmis en synchronisme dans des enveloppes avec des bits de commande, caractérisé par le fait que chaque enveloppe comporte des bits d'information d'au moins deux canaux de données fournissant des données, et que les bits de commande sont utilisés comme seule information de synchronisation de bits et de multiplets.

2. Procédé pour la mise en oeuvre d'un système de transmission de données selon la revendication 1, caractérisé par les phases opératoires successives suivantes:

a) du côté émission, les données non structurées et provenant de chaque équipement terminal de données (E1 à En) sont transmises par les canaux de données respectifs (K1 à Kn) avec la vitesse de transmission de données correspondante,

b) les données sont imbriquées et assemblées en enveloppes par adjonction de bits de commande de manière que chaque enveloppe contienne des bits d'information d'une pluralité de canaux de données (K1 à Kn) et que le nombre de bits d'information de chaque canal de données (K1 à Kn) dépende du rapport entre la vitesse de transmission de données d'un canal d'abonné (TL) relié au réseau informatique et les vitesses de transmission de données dans les canaux de données associés (K1 à Kn),

c) les enveloppes sont émises de façon sérielle au canal d'abonné (TL),

d) du côté réception, on sépare les bits de commande des enveloppes transmises par le canal d'abonné (TL) et les bits d'information sont répartis sur les canaux de données correspondants (K1 à Kn),

e) la répartition des bits d'information en multiplets et la saisie des différents bits d'information sont synchronisés à l'aide des bits de commande,

f) les données sont transmises de façon sérielle aux vitesses de transmission correspondantes des données, par l'intermédiaire des canaux de données aux équipements terminaux branchés (E1 à En).

3. Procédé selon la revendication 2, caractérisé par le fait qu'à un canal de données (K1 à Kn) est associé au moins un bit d'information (D) dans au moins une enveloppe parmi une série d'enveloppes.

4. Montage pour la mise en oeuvre du procédé selon la revendication 2 ou 3 dans lequel les équipements terminaux sont reliés au réseau informatique par l'intermédiaire de canaux de données associés et d'adaptateurs télégraphiques ou de communication de données, caractérisé par le fait que dans la voie de liaison entre l'équipement terminal (E1 à En) et l'adaptateur télégraphique ou de communication corespondant (AG) il est prévu, aussi bien du côté émission que du côté réception, un diviseur de canaux (KT) qui imbrique les bits d'information transmis par les canaux de données (K1 à Kn) ou qui répartit les bits d'information des enveloppes sur les différents canaux de données (K1 à Kn) et que ledit adaptateur télégraphique ou de communication (AG) comporte, aussi bien du côté émission que du côté réception, au moins une mémoire dans laquelle sont mémorisés par l'intermédiaire du diviseur de canaux (KT) les bits d'information transmis par les canaux de données (K1 à Kn) ou à partir de laquelle les bits d'information des enveloppes sont lus et sont émis par l'intermédiaire du diviseur de canaux (KT) aux canaux de données (K1 à Kn).

5. Montage selon la revendication 4, caractérisé par le fait que le diviseur de canaux (KT) comporte pour chaque canal de données (K1 à Kn) un registre à décalage (SR1, SR2) situé du côté émission et un registre à décalage (SR7, SR8) situé du côté réception, dans lequel les données associées aux canaux de données (K1 à Kn) sont mémorisés temporairement avant leur prise en charge par l'adaptateur télégraphique ou de communication (AG) ou aprés leur transmission par ce dernier.

6. Montage selon la revendication 5, caractérisé par le fait que la longueur de registres à décalage (SR1, SR2, SR7, SR8) est égale au nombre de bits d'information (D, D') associés aux canaux de données respectifs (K1 à Kn).

7. Montage selon la revendication 5 ou 6, caractérisé par le fait que l'adaptateur télégraphique ou de communication (AG) comporte, aussi bien du côté émission que du côté réception, des registres à décalage (SR3 à SR6) recevant une pluralité d'enveloppes et reliés aux registres à décalage (SR1, SR2, SR7, SR8) associés aux canaux de données (K1 à Kn).

8. Montage selon l'une des revendications 4 à 7, caractérisé par le fait qu'il est prévu des commutateurs (SW1, SW2) par l'intermédiaire desquels des impulsions de cadence (T1 ou T9) produites dans un générateur de cadence (TG) situé du côté émission ou dans un dispositif de synchronisation situé du côté réception, sont appliquées, au choix, aux registres à décalage (SR3, SR6) ou à des diviseurs de fréquences (F1, F2) prévus dans l'adaptateur télégraphique ou de communication (AG) et qui produisent des signaux de cadence d'émission ou de réception (T2 ou T11) associés à la pluralité de canaux de données (K1 à Kn).

0 006 986

# FIG 1

# FIG 2

## FIG 3

a) | S | A | D | D | D | D | D | D | D | D |

b) | S | A | 1 | 2 | 3 | 4 | 1 | 2 | 3 | 4 |

c) | S | A | 1 | 2 | 1 | 2 | 1 | 2 | 1 | 2 |

d) | S | A | 1 | 2 | 1 | 3 | 1 | 2 | 1 | 3 |

e) | S | A | 1 | 1 | 1 | 2 | 1 | 1 | 1 | 2 |

## FIG 4

a) | S | A | D | D | D | D | D | D | S | A | D' | D' | D' | D' | D' | D' |

b) | S | A | 1 | 2 | 3 | 4 | 1 | 2 | S | A | 3 | 4 | 1 | 2 | 3 | 4 |

c) | S | A | 1 | 2 | 1 | 2 | 1 | 2 | S | A | 1 | 2 | 1 | 2 | 1 | 2 |

d) | S | A | 1 | 2 | 1 | 3 | 1 | 2 | S | A | 1 | 3 | 1 | 2 | 1 | 3 |

e) | S | A | 1 | 1 | 1 | 2 | 1 | 1 | S | A | 1 | 2 | 1 | 1 | 1 | 2 |

# FIG 5